# EUROPÄISCHE PATENTSCHRIFT

(11) **EP 2 913 563 B1**
(45) Veröffentlichungstag und Bekanntmachung des Hinweises auf die Patenterteilung: **17.07.2019**
(21) Anmeldenummer: 15154277.6
(22) Anmeldetag: 09.02.2015
(51) Int. Cl.: F16H 59/02, F16H 61/22, B60W 20/00

(54) **Hybrid-Antriebseinheit**
Hybrid drive unit
Unité d'entraînement hybride

(30) Priorität: 26.02.2014 DE 102014203473
(43) Veröffentlichungstag der Anmeldung: 02.09.2015
(73) Patentinhaber: Schaeffler Technologies AG & Co. KG, 91074 Herzogenaurach (DE)
(72) Erfinder: Vornehm, Martin, 77815 Bühl (DE)

(56) Entgegenhaltungen:
- EP-A2- 1 759 915
- DE-A1-102007 052 261
- DE-A1-102012 203 584
- US-A1- 2014 004 996

## Beschreibung

Die Erfindung betrifft eine Hybrid-Antriebseinheit für ein Fahrzeug gemäß dem Oberbegriff des Anspruchs 1 sowie ein Verfahren zum Betrieb eines Hybridfahrzeugs, das heißt eines durch einen Verbrennungsmotor sowie elektromotorisch antreibbaren Fahrzeugs, gemäß dem Oberbegriff des Anspruchs 7.

Fahrzeuge mit Hybridantrieb sind hinsichtlich ihrer Bedienung, insbesondere was das Einlegen von Fahrstufen betrifft, in der Regel mit rein verbrennungsmotorisch angetriebenen Fahrzeugen mit Automatikgetriebe vergleichbar. Aus der DE 10 2008 042 682 A1 ist beispielsweise ein Hybridfahrzeugantriebssystem mit Planetengetriebemechanismen bekannt.

Als alternativen Lösungsansatz offenbart die DE 10 2007 052 261 A1 ein sogenanntes Hybrid-Handschaltgetriebe. In diesem Fall ist ein Wählelement mit mehreren, in einem H-förmigen Schaltschema angeordneten Schaltgassen vorgesehen, welches einen manuellen Wechsel zwischen verschiedenen Gangstufen des Getriebes ermöglicht. Weiterhin ermöglich das Wählelement die Aktivierung einer elektrischen Maschine, die im elektrischen Fahrbetrieb des Hybridfahrzeugs als alleiniger Fahrantriebsmotor zum Einsatz kommt. Das manuell schaltbare Getriebe des Hybridfahrzeugs ist während des elektrischen Fahrbetriebs in seine Neutralstellung geschaltet. Zum Einlegen eines elektrischen Rückwärtsgangs kann nach der DE 10 2007 052 261 A1 die Betätigung eines zusätzlichen Schalthebels erforderlich sein.

Die DE 10 2010 023 093 A1 offenbart einen Antriebsstrang für ein Kraftfahrzeug, welcher eine verbrennungsmotorische sowie eine elektrische Antriebseinheit umfasst, wobei zwischen dem Verbrennungsmotor und der durch den Verbrennungsmotor angetriebenen Achse des Kraftfahrzeugs ein Freilauf angeordnet ist. Der Freilauf soll der Vermeidung von Schleppmomenten aufgrund des Verbrennungsmotors bei elektromotorischem Betrieb des Kraftfahrzeugs dienen. Weiterhin soll es durch den Freilauf möglich sein, während eines rein elektromotorischen Betriebs des Kraftfahrzeugs den Verbrennungsmotor zu starten, ohne den elektromotorischen Betrieb unmittelbar zu beeinflussen. Beim elektromotorischen Anfahren ist vorgesehen, zunächst eine Gangstufe eines mit dem Verbrennungsmotor gekoppelten Schaltgetriebes einzulegen. Hierdurch soll sichergestellt sein, dass auch bei rein elektromotorischem Betrieb die richtige Gangstufe eingelegt ist, sodass ein Zuschalten des Verbrennungsmotors schnell erfolgen kann.

Aus der US 2014/0004996 A1 und der EP 1 759 915 A2 sind jeweils eine Hybrid-Antriebseinheit gemäß dem Oberbegriff des Anspruchs 1 und ein Verfahren gemäß dem Oberbegriff des Anspruchs 7 bekannt.

Der Erfindung liegt die Aufgabe zugrunde, eine Hybrid-Antriebseinheit gegenüber dem genannten Stand der Technik insbesondere hinsichtlich des Bedienkomforts sowie der Risiken von Fehlbedingungen weiterzuentwickeln.

Diese Aufgabe wird erfindungsgemäß gelöst durch eine Hybrid-Antriebseinheit mit den Merkmalen des Anspruchs 1 sowie durch ein Verfahren zum Betrieb eines Hybridfahrzeugs gemäß Anspruch 7. Im Folgenden im Zusammenhang mit dem Betriebsverfahren erläuterte Ausgestaltungen und Vorteile der Erfindung gelten sinngemäß auch für die Antriebseinheit und umgekehrt.

Die Hybrid-Antriebseinheit umfasst ein manuell betätigbares Wählelement, insbesondere in Form eines Schalthebels, welches zum einen bei verbrennungsmotorischem Antrieb das Wechseln von Gängen eines Schaltgetriebes und zum anderen die Aktivierung eines als Fahrantriebsmotor vorgesehenen Elektromotors ermöglicht. Zwei voneinander unterscheidbare Neutralstellungen des Wählelementes korrespondieren jeweils mit der Leerlaufstellung des Schaltgetriebes, wobei aus der ersten Neutralstellung des Wählelementes heraus, wie bei einem herkömmlichen Schaltgetriebe, die Gänge des Schaltgetriebes wechselbar sind und in der zweiten Neutralstellung des Wählelements ausschließlich der Elektromotor als Fahrantrieb aktivierbar ist, während der Verbrennungsmotor allenfalls zum Antrieb mindestens eines Nebenaggregates, beispielsweise eines Generators, in Betrieb ist. Bei einem Wechsel des Wählelements von einer Stellung, in der ausschließlich der Elektromotor als Fahrantrieb aktiviert ist, zu der ersten Neutralstellung der Verbrennungsmotor automatisch gestartet wird.

Die Verwendung des Begriffs "Elektromotor" in der Einzahl schließt nicht aus, dass eine Mehrzahl an Elektromotoren als Fahrantriebsmotoren vorgesehen ist. Beispielsweise kann es sich hierbei um Radnabenmotoren oder Motoren in Radnähe handeln. Der Elektromotor beziehungsweise die Anordnung aus mehreren Elektromotoren hat nicht notwendigerweise eine mechanische Verbindung mit dem Verbrennungsmotor. Dementsprechend ist auch das manuell betätigbare Wählelement, welches dem verbrennungsmotorischen Antriebsstrang zuzurechnen ist, in typischen Ausgestaltungen nicht mechanisch mit dem elektromotorischen Antriebsstrang gekoppelt. In jedem Fall ist ein Sperrmechanismus vorgesehen, welcher überwunden oder entsperrt werden muss, um das Wählelement von der ersten Neutralstellung in die zweite Neutralstellung oder umgekehrt zu bewegen.

Der Sperrmechanismus kann in verschiedensten Ausgestaltungen realisiert sein und beispielsweise rein mechanische (z.B. lediglich Federn zur Rastierung) oder elektromechanische Sperrelemente umfassen. In besonders vorteilhafter Ausgestaltung nutzt der Sperrmechanismus mindestens eine Komponente des mit der Hybridantriebseinheit ausgerüsteten Fahrzeugs, welche bei einem Fahrzeug mit manuell betätigbarem Schaltgetriebe ohnehin vorhanden ist. Beispielsweise stellt zumindest eine Komponente eines manuell betätigbaren Kupplungsbetätigungsmechanismus, insbesondere ein Sensor dieses Kupplungsbetätigungsmechanismus, ein Funktionselement des Sperrmechanismus dar. Für einen Wechsel zwischen den verschiedenen Neutralstellungen des Wählelementes kann in diesem Fall das Treten des Kupplungspedals des Hybridfahrzeugs erforderlich sein. Alternativ kann der Sperrmechanismus ein am Wählelement angebrachtes Betätigungselement, beispielsweise in Form einer Taste, umfassen, welches zu betätigen ist, um das Wählelement von einer Neutralstellung in die andere Neutralstellung bewegen zu können. In besonders einfacher Ausgestaltung ist der Sperrmechanismus in Form einer definierten Raststellung des Wählelementes oder einer Komponente des Getriebes realisiert, welche durch Krafteinwirkungen auf das Wählelement überwunden werden kann.

Das Wählelement ist vorzugsweise als Schalthebel ausgebildet, welcher in einem herkömmlichen, H-förmigen Schaltschema schaltbar ist. Als "H-förmig" werden hierbei auch Schaltschemata bezeichnet, welche landläufig als "Doppel-H" oder "Mistgabel" bezeichnet werden. Die beiden Neutralstellungen des Wählelementes sind vorzugsweise in ein und derselben Gasse des Schaltschemas angeordnet. Von Vorteil sind Gestaltungen des Schaltschemas, bei welchen die Position, in der der elektrische Antriebsmodus aktiviert ist, nahe der niedrigsten Gänge des Schaltgetriebes angeordnet ist.

Im elektromotorischen Antriebsmodus ist der Kraftfluss zwischen dem Verbrennungsmotor und den von diesen antreibbaren Rädern des Fahrzeugs durch die Leerlaufstellung des Schaltgetriebes unterbrochen. Eine weitere Unterbrechung des Kraftflusses, etwa durch eine geöffnete Kupplung, ist nicht erforderlich. Dennoch sind durch den Zustand der Kupplung, welche sich im verbrennungsmotorischen Antriebsstrang befindet, definierte, voneinander unterscheidbare Zustände des elektromotorischen Antriebsstrangs gegeben, selbst wenn der verbrennungsmotorische und der elektromotorische Antriebsstrang voneinander getrennt sind. Insbesondere kann eine Reduzierung der vom Elektromotor abgegebenen Leistung bis auf Null vorgesehen sein, wenn der Fahrer des Hybridfahrzeugs die Kupplung öffnet, das heißt - im Fall üblicher Bedienkonzepte - das Kupplungspedal tritt. Auf diese Weise wird ein vom Fahrer als natürlich empfundenes Fahrgefühl erzeugt, welches an ein herkömmlich, rein verbrennungsmotorisch angetriebenes Fahrzeug mit Schaltgetriebe erinnert.

In Stress- oder Notsituationen ist davon auszugehen, dass der Fahrer eines Kraftwagens stets intuitiv entsprechend eingeübter Verhaltensmuster handelt. Bei einer Notbremsung wird zum Beispiel typischerweise das Bremspedal und die Kupplung getreten und der Gang ausgelegt. Exakt diese Handlungen sind auch bei der Hybrid-Antriebseinheit möglich und sinnvoll. Insbesondere wird durch das Auskuppeln die Einspeisung von Leistung in den elektrischen Antriebsstrang abrupt unterbrochen, obwohl der Vorgang des Auskuppelns mechanisch von der Drehmomentübertragung im elektrischen Antriebsstrang unabhängig ist.

Gemäß einer Weiterbildung ist in den verbrennungsmotorischen Antriebsstrang eine Freilaufkupplung integriert, wie prinzipiell aus der DE 10 2010 023 093 A1 bekannt. Aufgrund des Freilaufs und des damit fehlenden Schleppmoments des Verbrennungsmotors ist im generatorischen Betrieb des elektrischen Fahrantriebsmotors eine besonders hohe Rekuperation möglich. Zudem sorgt das fehlende Schleppmoment des Verbrennungsmotors für einen Fahreindruck, der den Fahrer an ein herkömmliches Fahrzeug mit Wandlerautomatik erinnert.

Die Hybrid-Antriebseinheit kommt vorzugsweise bei einem Fahrzeug, beispielsweise Personenkraftwagen, mit einem herkömmlichen, nicht automatisierten Getriebe zum Einsatz. In alternativen Ausgestaltungen kann die Hybrid-Antriebseinheit auch in Fahrzeuge mit automatisiertem Getriebe, beispielsweise Doppelkupplungsgetriebe, integriert sein, wobei in diesen Fällen der Sperrmechanismus, welcher beim Umschalten zwischen verbrennungsmotorischem und elektromotorischem Antrieb zu überwinden ist, zumindest aus Sicht des Bedieners keinen Zusammenhang mit der Kupplungsbetätigung hat.

Nachfolgend werden mehrere Ausführungsbeispiele der Erfindung anhand einer Zeichnung näher erläutert. Hierin zeigen:
- Fig. 1 und 2: in schematischen Darstellungen mehrere Versionen von Hybridfahrzeugen mit verbrennungsmotorischem Vorderradantrieb,
- Fig. 3 bis 6: in Darstellungen analog Figur 1 und 2 mehrere Versionen von Hybridfahrzeugen mit verbrennungsmotorischem Hinterradantrieb,
- Fig. 7: ein Schaltschema eines Hybridfahrzeugs mit Handschaltung,
- Fig. 8: vereinfachte Schaltschemata von Hybridfahrzeugen,
- Fig. 9: in einer perspektivischen Darstellung Komponenten einer Handschaltung eines Hybridfahrzeugs,
- Fig. 10 und 11: jeweils Einzelheiten einer Handschaltung eines Hybridfahrzeugs,
- Fig. 12: in einem Diagramm Kraft- und Signalverläufe bei einer Hybrid-Handschaltung,
- Fig. 13: in einem Diagramm einen Anfahr- und Beschleunigungsvorgang eines Hybridfahrzeugs,
- Fig. 14: in einem Flussdiagramm Betriebsmodi eines Hybridfahrzeugs mit Handschaltgetriebe,
- Fig. 15: in einem Flussdiagramm verschiedene Zustände eines stehenden Hybridfahrzeugs.

Einander entsprechende oder prinzipiell vergleichbare Teile oder Parameter sind in allen Figuren mit den gleichen Bezugszeichen gekennzeichnet.

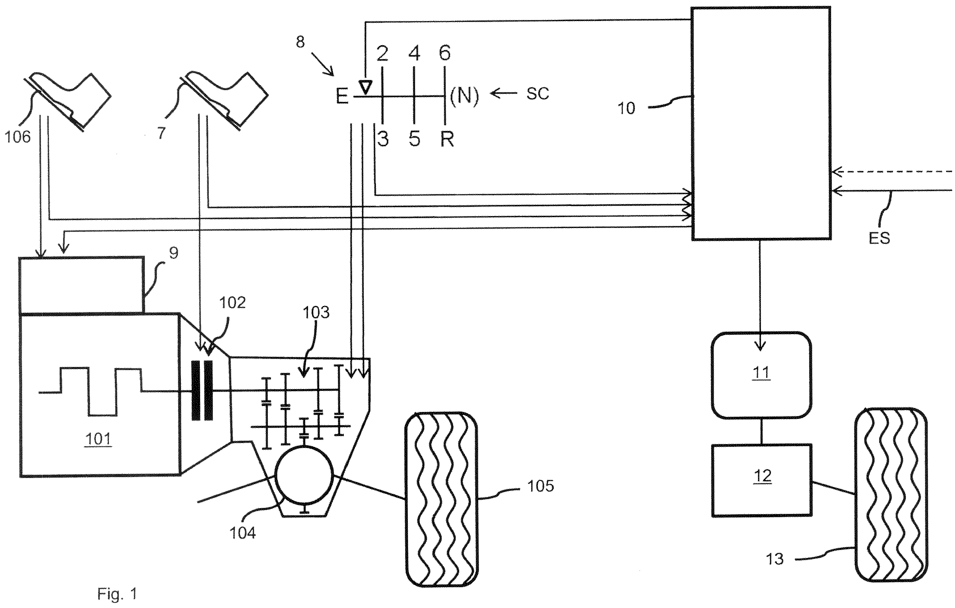

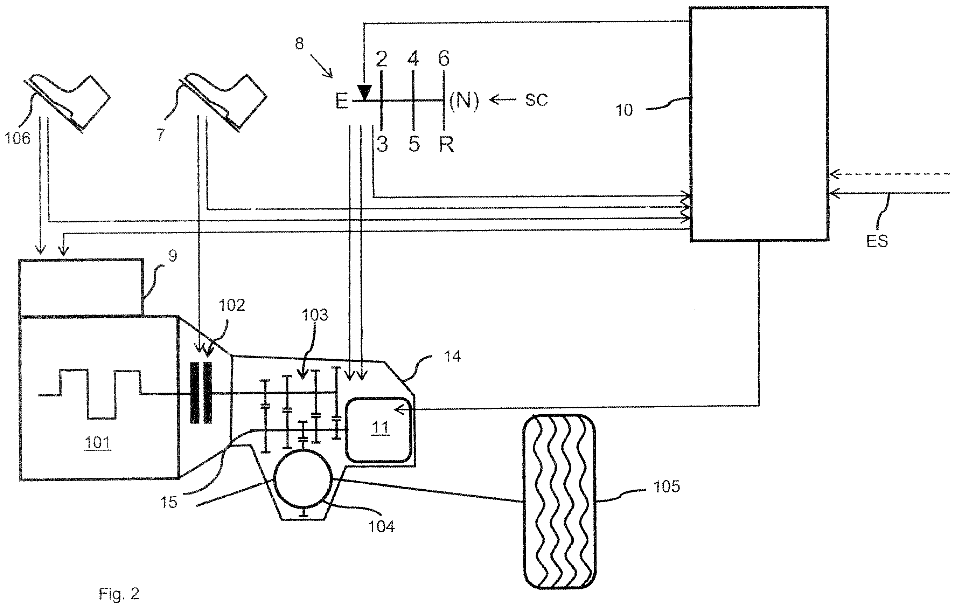

Die Figuren 1 bis 6 veranschaulichen verschiedene Bauarten eines Hybridfahrzeugs, in welchem jeweils die erfindungsgemäße Hybrid-Antriebseinheit sowie das erfindungsgemäße Betriebsverfahren realisiert ist. In den Ausführungsbeispielen nach den Figuren 1 und 2 überträgt ein Verbrennungsmotor 101, nämlich ein Dieselmotor oder ein Ottomotor, Drehmoment über eine Kupplung 102 auf ein Schaltgetriebe 103. Eine weitere Drehmomentübertragung erfolgt über ein Differentialgetriebe 104 auf die Vorderräder 105 des Fahrzeugs. In Figur 1 sind ferner ein Gaspedal 106, ein Kupplungspedal 7 als Komponente eines nicht komplett dargestellten Kupplungsbetätigungsmechanismus, sowie eine Handschaltvorrichtung 8 mit einem Schaltschema SC angedeutet. Das Gaspedal 106 ist steuerungstechnisch mit einer Motorsteuerung 9 verknüpft. Ebenso ist die Stellung des Kupplungspedals 7, mit welchem die Kupplung 2 betätigbar ist, durch eine geeignete, an sich bekannte Sensorik detektierbar.

Die Motorsteuerung 9 ist verknüpft mit einer Steuereinheit 10, welche innerhalb des Hybridfahrzeugs eine zentrale Funktion sowohl bei elektromotorischem als auch bei verbrennungsmotorischem Antrieb hat. Die Steuereinheit 10 verarbeitet neben Signalen der Motorsteuerung 9 und indirekt des Gaspedals 109 sowie der Handschaltvorrichtung 8 diverse Eingangssignale ES wie beispielsweise die Fahrzeuggeschwindigkeit. Auch die manuelle Schaltbarkeit des Schaltgetriebes 103 wird durch die Steuereinheit 10 beeinflusst, wie im Folgenden noch näher erläutert wird.

Durch die Steuereinheit 10 wird die Bestromung eines Elektromotors 11 bestimmt, welcher über ein Getriebe 12 die Hinterräder 13 des Hybridfahrzeugs antreibt. Ein zwischen das Getriebe 12 und die Hinterräder 13 geschaltetes Differentialgetriebe ist in diesem Fall nicht eingezeichnet. Anstelle eines einzelnen Elektromotors 11 kann auch ein gesonderter Elektromotor für den Antrieb jedes Hinterrads 13, beispielsweise in Form eines Radnabenmotors, vorgesehen sein. Beim Getriebe 12 kann es sich um ein Getriebe mit fester Übersetzung, um ein Schaltgetriebe mit mehreren, diskreten Übersetzungsverhältnissen oder um ein Getriebe mit variabler Übersetzung handeln. Das Getriebe 12 kann auch eine Leerlaufstellung oder Kupplung umfassen.

Das Ausführungsbeispiel nach Fig. 2 unterscheidet sich vom Ausführungsbeispiel nach Fig. 1 dadurch, dass zusätzlich zum Verbrennungsmotor 101 auch der Elektromotor 11 die Vorderräder 105 antreibt. Der Elektromotor 11 ist hierbei zusammen mit dem Schaltgetriebe 103 und dem Differenzialgetriebe 104 in einem gemeinsamen Gehäuse 14 angeordnet und weist eine nicht dargestellte Motorwelle auf, die drehfest mit einer Getriebeausgangswelle 15 des Schaltgetriebes 103 verbunden ist. Abweichend von der Ausgestaltung gemäß Fig. 2 könnte zwischen die Motorwelle des Elektromotors 11 und die Getriebeausgangswelle 15 eine schaltbare, mittels der Steuereinheit 10 betätigbare Kupplung geschaltet sein.

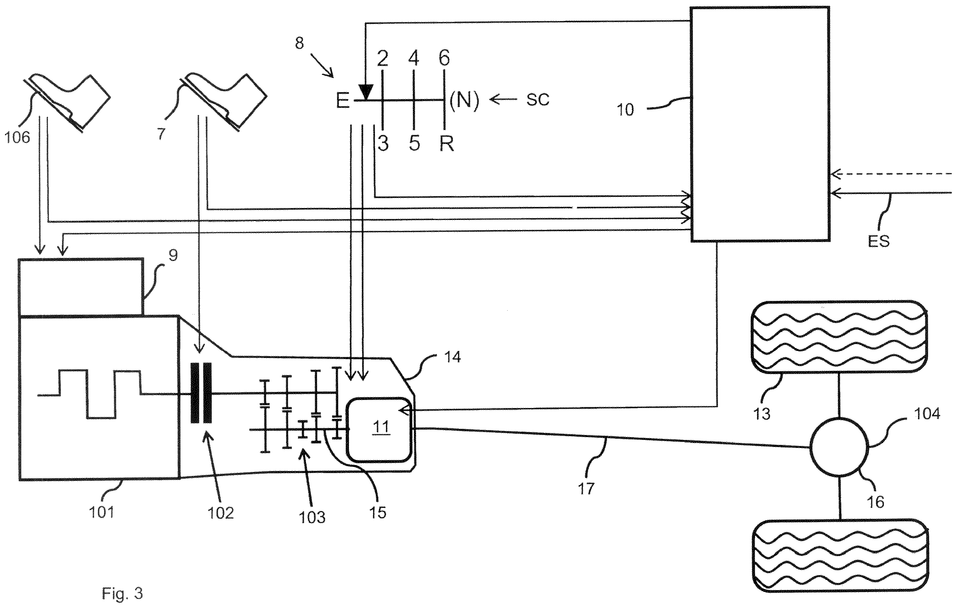

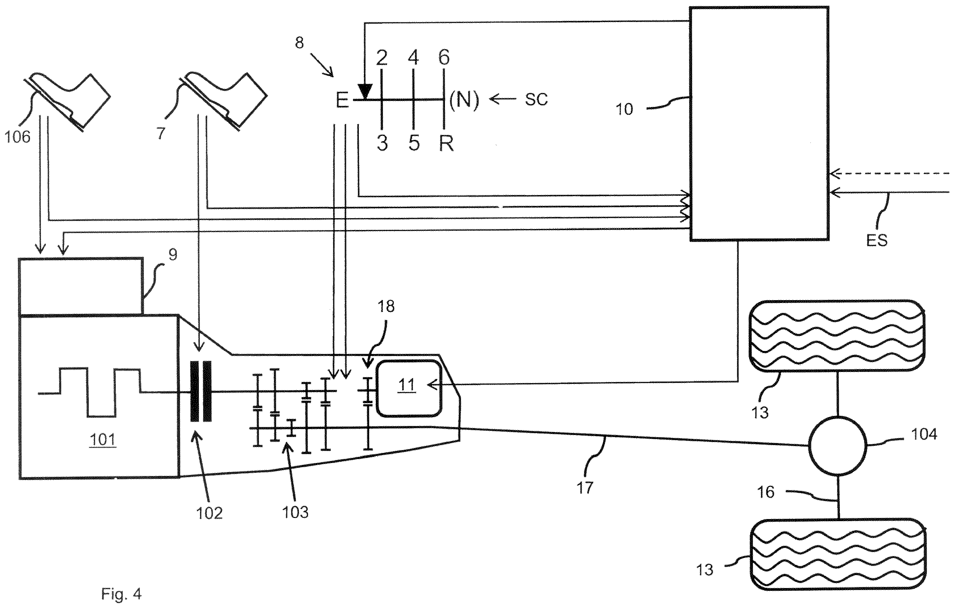

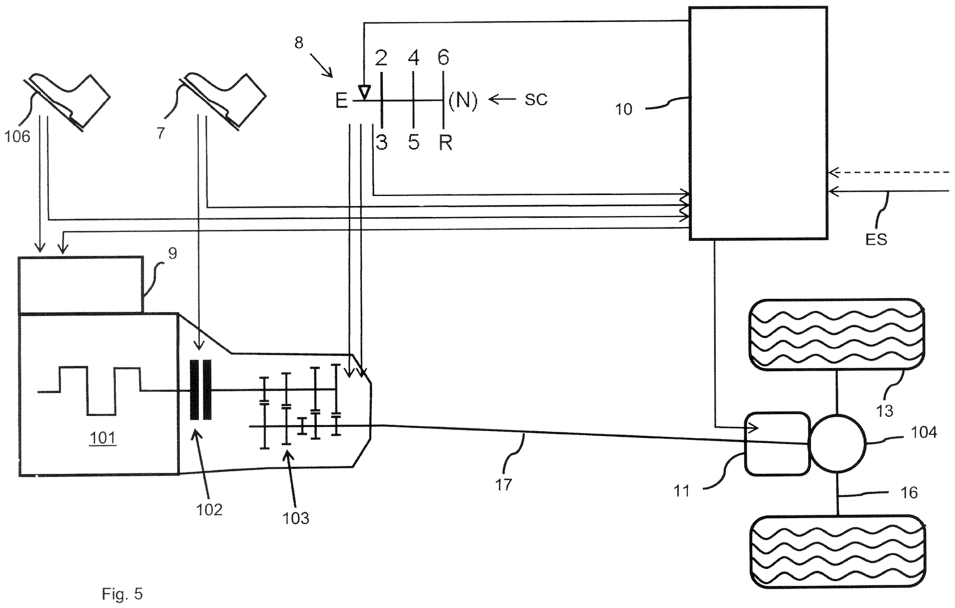

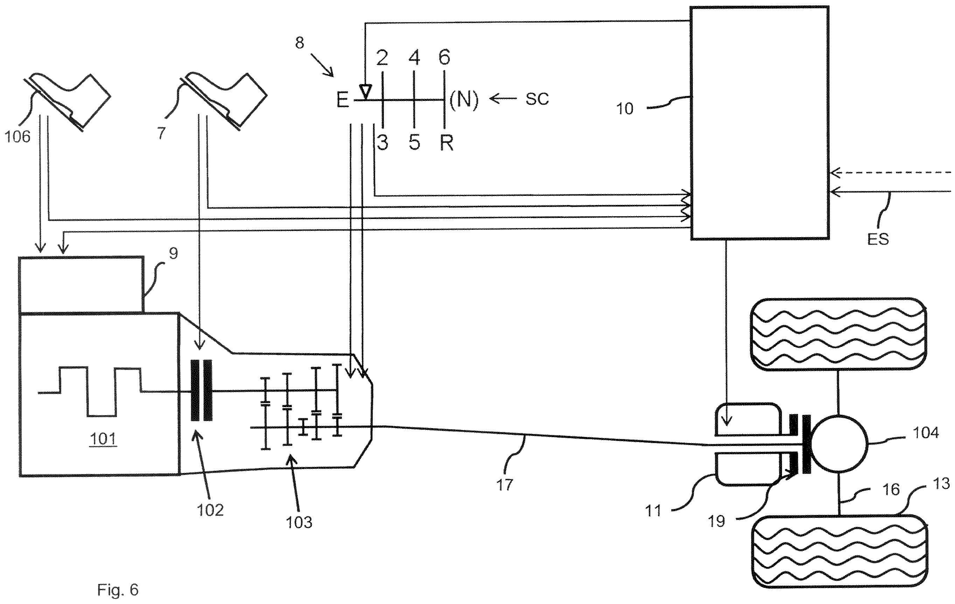

Die Ausführungsbeispiele nach den Fig. 3 bis 6 zeigen jeweils ein Fahrzeug mit reinem Hinterradantrieb. Während in den Anordnungen gemäß Fig. 3 und Fig. 4 der Elektromotor 11 in das Gehäuse 14, in welchem sich das Schaltgetriebe 103 befindet, eingebaut ist, ist der Elektromotor 11 in den in Fig. 5 und Fig. 6 skizzierten Fällen nahe der mit 16 bezeichneten Hinterachse des Fahrzeugs angeordnet.

Gemäß Fig. 3 ist der Elektromotor 11 - vergleichbar mit der Lösung nach Fig. 2 - direkt an die Getriebeausgangswelle 15 angekoppelt. Die Motorwelle des Elektromotors 11 gemäß Fig. 3 ist weiter drehfest verbunden mit einer Kardanwelle 17. Das Ausführungsbeispiel nach Fig. 4 unterscheidet sich vom Ausführungsbeispiel nach Fig. 3 dadurch, dass der Elektromotor 11 nicht als Direktantriebsmotor mit der Kardanwelle 17 gekoppelt ist, sondern über eine Getriebestufe 18 Drehmoment in die Kardanwelle 17 einspeist.

Sowohl im Ausführungsbeispiel nach Fig. 5 als auch im Ausführungsbeispiel nach Fig. 6 treibt der Elektromotor 11 direkt die Kardanwelle 17 an. In beiden Fällen kann der Elektromotor 11 in nicht dargestellter Weise zusammen mit dem Differenzialgetriebe 104 in einem gemeinsamen Gehäuse angeordnet sein. Während in der Ausgestaltung gemäß Fig. 5 der Rotor des Elektromotors 11 stets mit der Drehzahl der Kardanwelle 17 rotiert, ist in der Ausgestaltung gemäß Fig. 6 zwischen den Elektromotor 11 und die Kardanwelle 17 eine schaltbare Kupplung 19 geschaltet. Dies ermöglicht eine bedarfsweise Zu- und Abschaltung des Elektromotors 11, welcher ebenso wie in den Ausführungsbeispielen nach den Fig. 1 bis 5, wahlweise als Antriebsmotor oder generatorisch betreibbar ist. Zusätzlich zur Kupplung 19 kann im Ausführungsbeispiel nach Fig. 6 - prinzipiell vergleichbar mit der Lösung nach Fig. 4 - ein Untersetzungsgetriebe zwischen den Elektromotor 11 und das Differenzialgetriebe 104 geschaltet sein.

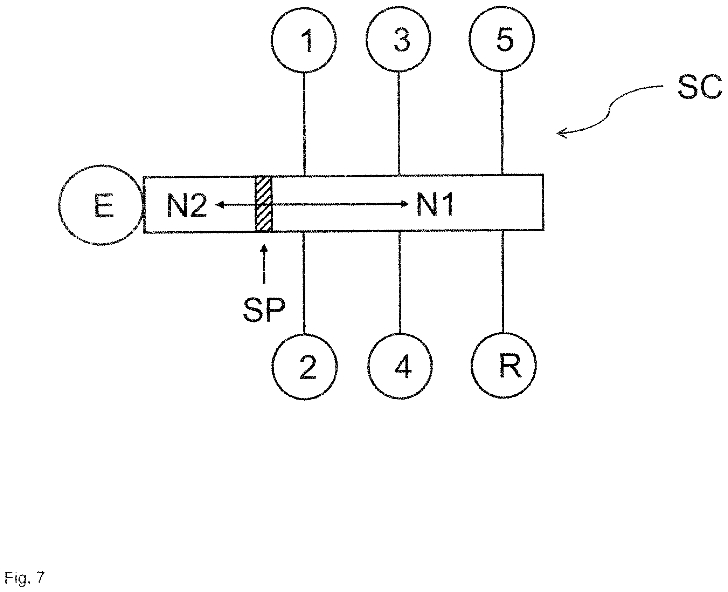

Die Fig. 7 zeigt das Schaltschema SC der Handschaltvorrichtung 8, wie sie in jedem der Ausführungsbeispiele nach den Fig. 1 bis 6 zum Einsatz kommt, wobei in den Fig. 1 bis 6 der niedrigste Gang des Schaltgetriebes 103 mit "2" bezeichnet ist, da das Anfahren vorzugsweise elektrisch erfolgt. Innerhalb der Leerlaufstellung des Schaltgetriebes 103 existieren zwei voneinander unterscheidbare Neutralstellungen N1,N2 der Handschaltvorrichtung 8. In der ersten Neutralstellung N1 befindet sich das Schaltgetriebe 103, wie bei einem herkömmlichen, rein verbrennungsmotorisch angetriebenen Fahrzeug mit Handschaltung, in der Wählgasse, aus welcher heraus die einzelnen Vorwärtsgänge 1 bis 5 sowie der Rückwärtsgang R einlegbar sind.

Aus der ersten Neutralstellung N1 heraus ist weiterhin die zweite Neutralstellung N2 anwählbar, wobei sich an der Leerlaufstellung des Schaltgetriebes 103 durch den Wechsel zwischen den Neutralstellungen N1,N2 nichts ändert. Der rein elektromotorische Antriebsmodus, im Schaltschema als E-Gang E bezeichnet, ist ausschließlich aus der zweiten Neutralstellung N2 heraus anwählbar, wobei die Positionen N2 und E im Schaltschema SC zusammenfallen können. Ein Wechsel zwischen den Neutralstellungen N1,N2 ist nur unter Überwindung eines mit SP bezeichneten Sperrmechanismus möglich. Das Lösen des Sperrmechanismus SP erfolgt durch Betätigung der Kupplung 2, das heißt durch Treten des Kupplungspedals 7. Der Wechsel zwischen verbrennungsmotorischem und elektromotorischem Antrieb ist damit aus Benutzersicht mit dem Wechsel zwischen verschiedenen Vorwärtsgängen des Schaltgetriebes 103 oder mit dem Wechsel zwischen einem der Vorwärtsgänge 1 bis 5 und dem Rückwärtsgang R vergleichbar.

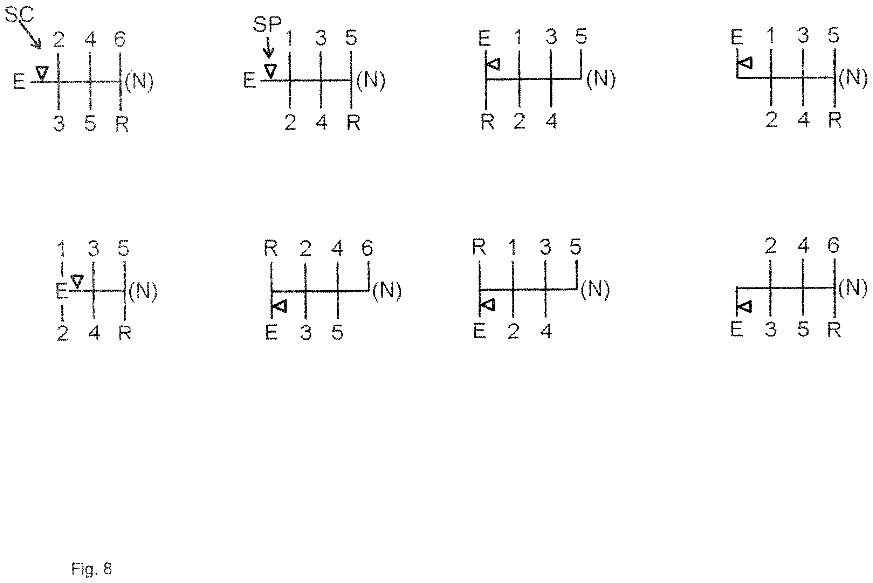

Die Fig. 8 zeigt verschiedene weitere Schaltschemata SC, die anstelle des Schaltschemas SC nach Fig. 7 bei den Antriebskonzepten nach den Fig. 1 bis 6 verwendbar sind. Der Rückwärtsgang R kann dabei durch den verbrennungsmotorischen und/oder elektromotorischen Antriebsstrang verwirklicht sein. Die beiden ersten in der oberen Reihe in Fig. 8 von links abgebildeten Schaltschemata SC sind funktionell identisch und entsprechen den Schaltschemata SC nach den Fig. 1 bis 7. Der Sperrmechanismus SP, soweit er sich im Schaltschema SC ausdrückt, ist in Fig. 8 jeweils durch ein Dreieck angedeutet. Tatsächlich ist der Sperrmechanismus SP durch ein System aus hard- und softwaretechnischen Komponenten realisiert.

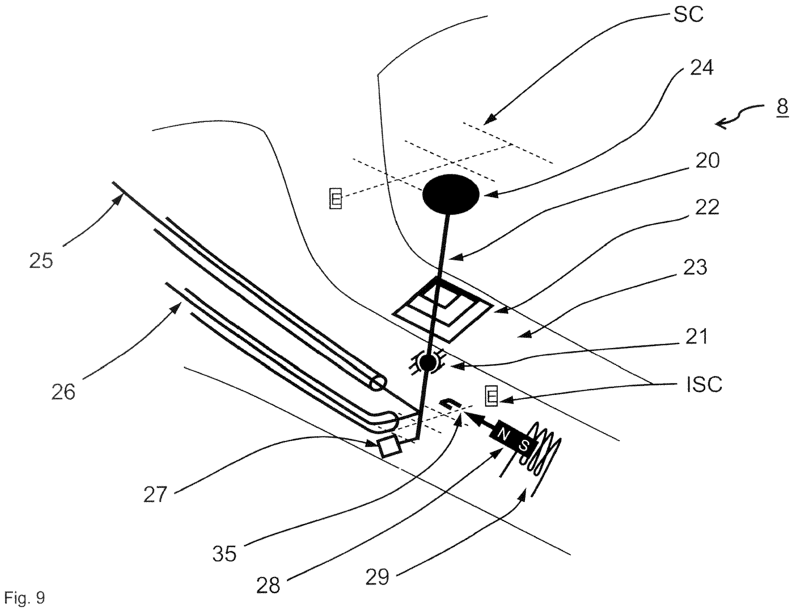

Das in Fig. 9 gestrichelt angedeutete Schaltschema SC entspricht dem Schaltschema SC nach Fig. 7. Ebenso könnte an dieser Stelle jedes andere Schaltschema SC nach Fig. 8 zu finden sein. Ein mit 20 bezeichnetes Wählelement, nämlich ein Schalthebel, der Handschaltvorrichtung 8 ist mittels eines Gelenks 21 gelagert und durch einen Faltenbalg 22 zu einer Mittelkonsole 23 hin abgedichtet. Alternativ zu der in Fig. 9 skizzierten Anordnung könnte die Handschaltvorrichtung 8 beispielsweise auch als Lenkradschaltung ausgebildet sein. Ein Schaltknauf auf dem auch Hebelstange genannten Schalthebel 20 ist in Fig. 9 mit 24 bezeichnet. Das dem Schaltknauf 24 abgewandte, innerhalb der Mittelkonsole 23 oder eines Tunnels liegende Ende des Schalthebels 20 kann in verschiedene Stellungen gebracht werden, die ein inverses, das heißt gespiegeltes Schaltschema ISC beschreiben, welches in Fig. 9 analog zum Schaltschema SC gestrichelt dargestellt ist.

Die Position des Schalthebels 20, durch welchen eine Schalteinrichtung 25 und eine Wähleinrichtung 26, in der Ausgestaltung gemäß Fig. 9 jeweils als Bowdenzug realisiert, betätigbar sind, ist durch eine Sensoreinrichtung 27 detektierbar. Anstelle oder zusätzlich zu Bowdenzügen können die Schalt- und Wähleinrichtungen 25,26 beispielsweise auch Stangen, Ketten, hydraulische oder elektrische Betätigungsmechanismen umfassen. In jedem Fall ist die Beweglichkeit des Schalthebels 20 durch ein Sperrelement 28 einschränkbar, welches eine mechanische Komponente des Sperrmechanismus SP darstellt und mit einem Elektromagneten 29 arbeitet. Die Bestromung des Elektromagneten 29 wird durch die Steuereinheit 10 bestimmt, welche hierfür Signale verarbeitet, die den Betätigungszustand der Kupplung 2 anzeigen.

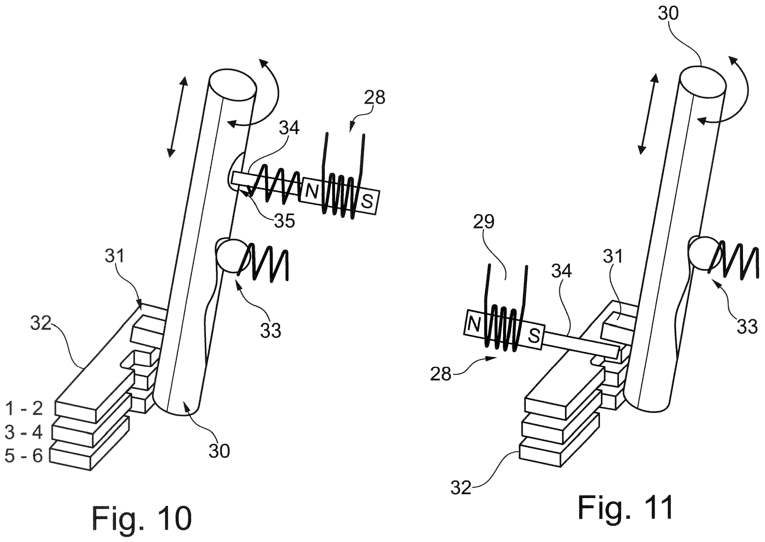

Einzelheiten möglicher Ausgestaltungen des Sperrelementes 28 gehen aus den Figuren 10 und 11 hervor. In beiden Fällen ist eine Schaltwelle 30 sichtbar, die mittels der Schalteinrichtung 25 sowie Wähleinrichtung 26 um ihre eigene Achse verschwenkbar beziehungsweise längs ihrer Achse verschiebbar ist. Mit der Schaltwelle 30 ist ein Schaltfinger 31 verbunden, welcher mit Schaltstangen 32 zusammenwirkt, die das Einlegen der Gänge 1 bis 6 des Schaltgetriebes 103 ermöglichen. Weiter ist eine Rastiervorrichtung 33 angedeutet, die Rastkräfte in Schalt- und Wählrichtung der Schaltwelle 30 erzeugt. Im Unterschied zum Sperrelement 28 weist die Rastiervorrichtung 33 keinen elektromechanischen Aktor auf. Ein mit 34 bezeichneter, mittels des Elektromagneten 29 verschiebbarer Sperrbolzen greift im Fall von Fig. 10 in eine innerhalb der Schaltwelle 30 gebildete Ausnehmung 35 und im Fall von Fig. 11 in einen Zwischenraum zwischen dem Schaltfinger 31 und den Schaltstangen 32 ein. In beiden Fällen sorgt die Aktivierung des Sperrelementes 28 in der inneren Schaltung des Schaltgetriebes 103 dafür, dass keiner der Gänge des Schaltgetriebes 103 eingelegt werden kann und die gegebenenfalls eingelegte E-Stellung gehalten werden kann.

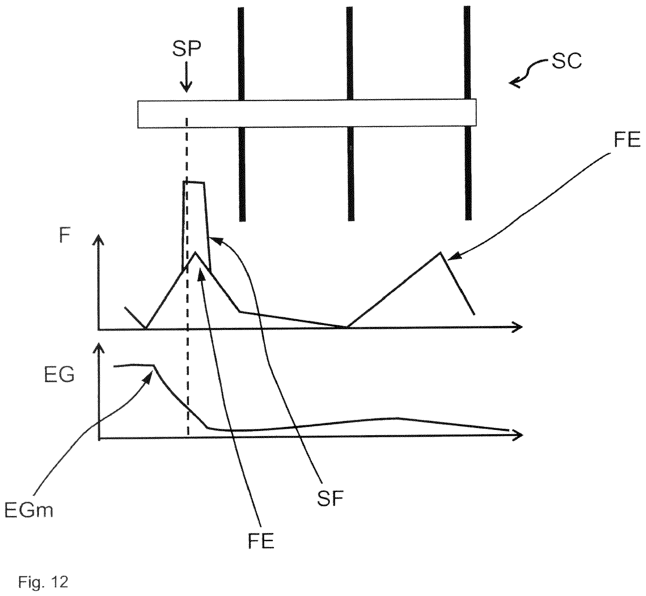

Ist das Sperrelement 28, wie in den Fig. 10 und 11 dargestellt, eingerastet, so kann das Fahrzeug ausschließlich im elektrischen Antriebsmodus gefahren werden. Die Kupplung 2 ist hierbei eingekuppelt. Ein durch die Sensoreinrichtung 27 bereitgestelltes Signal ist in Fig. 12 im untersten Diagramm veranschaulicht. Befindet sich der Schalthebel 20 in der Position "E-Gang", das heißt links von der gestrichelten Linie in Fig. 12, so ist ein von der Sensoreinrichtung 27 geliefertes E-Gang-Signal EG signifikant, z.B. maximal. Das hier maximale E-Gang-Signal, welches von der Sensoreinrichtung 27 in der Stellung E des Schalthebels 20 geliefert wird, ist mit EGm bezeichnet. Die gestrichelte Linie in Fig. 12 entspricht der mit SP bezeichneten Stellung (Fig. 7) des Schalthebels 20, das heißt derjenigen Stellung, über die der Schalthebel 20 nur bei entsperrtem Sperrmechanismus SP hinweg geschwenkt werden kann.

Solange das Fahrzeug elektromotorisch betrieben wird, ist der Verbrennungsmotor 101 abgestellt, sofern er nicht zur Stromerzeugung benötigt wird. Ein Verschwenken des Schalthebels 20 aus der Position "E-Gang" heraus in Richtung zur ersten Neutralstellung N1 korrespondiert mit einem kontinuierlichen Ändern, hier Absinken des von der Sensoreinrichtung 27 bereitgestellten E-Gang-Signal EG. Gleichzeitig nimmt, wie im oberen Diagramm in Fig. 12 skizziert, eine Betätigungskraft F kontinuierlich zu, welche zum Verschwenken des Schalthebels 20 erforderlich ist. Bleibt die Kupplung 2 geschlossen, so wird dem Verschwenken des Schalthebels 20 über die Sperrstellung SP hinaus eine Sperrkraft SF entgegengesetzt, welche im Rahmen üblicher Betätigungskräfte nicht überwunden werden kann. Erst durch Öffnen der Kupplung 102, das heißt Treten des Kupplungspedals 7, wird die Betätigungskraft F, welche zum Verschwenken des Schalthebels 20 zwischen den beiden Neutralstellungen N1,N2 erforderlich ist, auf ein bei üblichen Schaltvorgängen anzutreffendes Maß reduziert. Hierbei sind, wie aus Fig. 12 hervorgeht, teilweise erhöhte Betätigungskräfte FE anzuwenden, die typischerweise auch anzuwenden sind, um einen der höheren Gänge des Schaltgetriebes 103 einzulegen.

Über die Deaktivierung des Sperrelementes 28 hinaus hat das Öffnen der Kupplung 102 im Zuge der Umschaltung zwischen rein elektromotorischem und verbrennungsmotorischem Betrieb weitere Auswirkungen, welche mittels der Steuereinheit 10 sowie Motorsteuerung 9 realisiert werden. Beispielsweise könnte, abweichend vor der beanspruchten Erfindung, bei eingelegtem E-Gang, sobald das Kupplungspedal 7 getreten wird, der Verbrennungsmotor 1 gestartet werden, sofern dieser nicht bereits läuft und eine bestimmte Geschwindigkeitsschwelle, zum Beispiel 10 km/h, überschritten ist. Ebenso ist die Berücksichtigung weiterer Kriterien wie der Ladezustand der Batterie oder die Motortemperatur vorteilhaft. Auf diese Weise wird ein sehr schneller, flüssiger Übergang zwischen dem elektromotorischen und dem verbrennungsmotorischen Antrieb ermöglicht. Dieser Übergang wird optional dadurch erleichtert, dass dem Fahrer angezeigt wird, welchen Gang er einlegen sollte. Das Einlegen des Ganges wird automatisch dadurch erleichtert, dass die Drehzahl des Verbrennungsmotors 101 vor dem Einkuppeln auf ein passendes Niveau gebracht wird. Legt der Fahrer einen zu niedrigen Gang ein, so wird ihm die unpassende Gangwahl durch ein ausgeprägtes Hochdrehen des Verbrennungsmotors angezeigt. Hiermit wird dem Fahrer ein intuitiv verständliches Warnsignal gegeben, welches bei wiederholten Fehlbedienungen auch einen Lerneffekt einschließt.

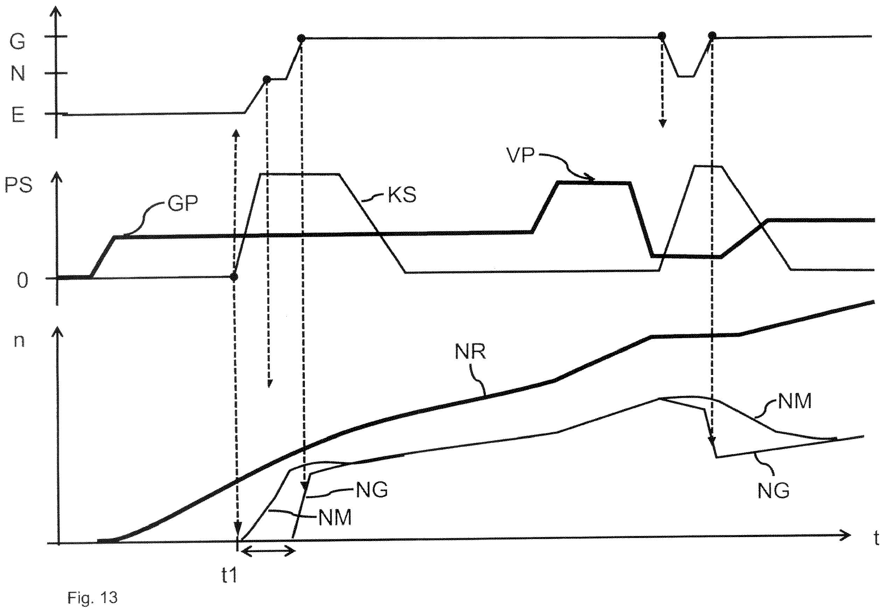

In Fig. 13 ist ein Anfahr- und Beschleunigungsvorgang eines Fahrzeugs veranschaulicht, welches als Handschalt-Hybridfahrzeug gemäß einer der Fig. 1 bis 6 konzipiert ist. Im untersten Diagramm in Fig. 13 ist der Verlauf dreier Drehzahlen n, nämlich der Raddrehzahl NR, der Kurbelwellendrehzahl NM, sowie der Drehzahl NG der Getriebeausgangswelle 15, in Abhängigkeit von der Zeit t dargestellt. Das mittlere Diagramm in Fig. 13 zeigt zwei Pedalstellungen PS, nämlich die Gaspedalstellung GP des Gaspedals106 sowie die Kupplungspedalstellung KS des Kupplungspedals 7. Im obersten Diagramm innerhalb von Fig. 13 sind schließlich verschiedene Positionen des Schalthebels 20, ebenfalls in Abhängigkeit von der Zeit t, angegeben, wobei in diesem Fall die mehrdimensionale Gestaltung des Schaltschemas SC unberücksichtigt ist.

Der Anfahrvorgang beginnt rein elektrisch, wobei sich der Schalthebel 20 in der Position "E" befindet. Die Kupplung 102 ist hierbei geschlossen. Mit dem Treten des Kupplungspedals 7 zum Zeitpunkt t₁ könnte, abweichend vor der beanspruchten Erfindung, der Verbrennungsmotor 101 automatisch gestartet werden. Der Schalthebel 20 wird im gleichen Zuge über die Neutralstellungen N1,N2, in Fig. 13 zusammenfassend als N bezeichnet, in eine Gangposition, in Fig. 13 mit G bezeichnet, gebracht. Bei diesem Vorgang kann, abweichend vom vereinfachten Diagramm nach Fig. 13, Gas weggenommen werden, das heißt, das Gaspedal 106 in Richtung 0 zurückgenommen werden, wie es bei der Bedienung eines Handschaltgetriebes üblicherweise geschieht. In jedem Fall kuppelt der Fahrer nach dem Einlegen des Gangs G ein, wobei das weitere Beschleunigen des Fahrzeugs entweder durch den Verbrennungsmotor 101 allein oder sowohl durch den Elektromotor 11 als auch durch den Verbrennungsmotor 101 erfolgt. In einer Vollgasphase VP wird eine kurzzeitig verfügbare erhöhte Leistung des Elektromotors 11 abgerufen. An die Vollgasphase VP schließt sich ein erneuter, manueller Gangwechsel ein, wobei die Bedienung des Kupplungspedals 7, des Gaspedals 106, sowie des Schalthebels 20 entsprechend dem Einlegen eines Ganges G beim Starten des Verbrennungsmotors 101 erfolgt.

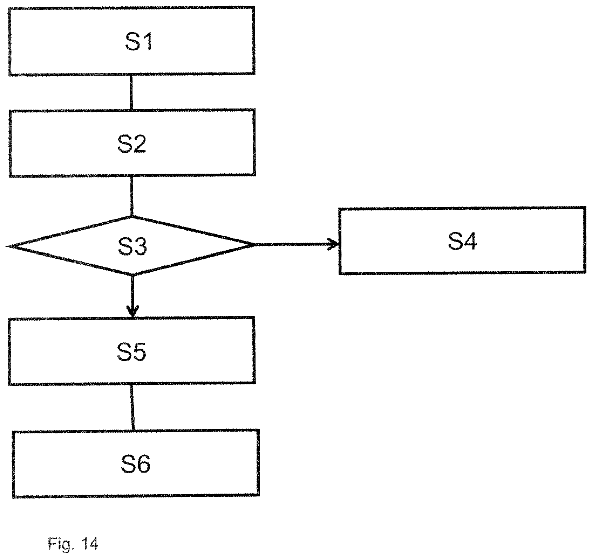

Anhand des Flussdiagramms nach Fig. 14 werden im Folgenden verschiedene Betriebsmodi erläutert, welche mit den Fahrzeugen gemäß Fig. 1 bis 6 realisierbar sind.

Es wird davon ausgegangen, dass das Fahrzeug in einem mit S1 bezeichneten ersten Verfahrensschritt rein elektrisch betrieben wird, wobei der E-Gang eingelegt ist. In diesem Betriebszustand sind das Gaspedal 106, welches insbesondere bei einem Elektrofahrzeug auch als Fahrpedal bezeichnet wird, sowie ein in den Figuren nicht dargestelltes Bremspedal steuerungstechnisch derart mit dem Elektromotor 11 gekoppelt, dass dieser nicht nur als Fahrantriebsmotor, sondern auch zur Rekuperation nutzbar ist. Der Sperrmechanismus SP ist hierbei aktiviert, womit insbesondere eine ungewollte Zuschaltung des verbrennungsmotorischen Antriebs unterbunden wird.

Im Verfahrensschritt S2 wird der Schalthebel 20 manuell aus der Position E herausgenommen, soweit dies in diesem Zustand hardwaretechnisch möglich ist. Bereits in diesem Schritt S2 könnte, abweichend vor der beanspruchten Erfindung, der Verbrennungsmotor 101 automatisch gestartet werden, womit ein bedeutsamer Zeitgewinn beim Umschalten zwischen elektromotorischem und verbrennungsmotorischem Antrieb erzielt wird.

Im Schritt S3 wird mittels der Steuereinheit 10 geprüft, ob der Sperrmechanismus SP aktiviert ist. Unter dem Begriff "Sperrmechanismus" werden hierbei sämtliche Komponenten subsummiert, die die Umschaltbarkeit zwischen den beiden Neutralstellungen N1,N2 beeinflussen, worunter auch steuerungs- und softwaretechnische Komponenten fallen. Bei aktiviertem Sperrmechanismus SP, was mit nicht getretenem Kupplungspedal 7 gleichbedeutend ist, wird im Schritt S4 der Wechsel in den verbrennungsmotorischen Betrieb blockiert.

Ist dagegen das Kupplungspedal 7 getreten und damit der Sperrmechanismus SP deaktiviert, so kann in Schritt S5 die erste Neutralstellung N1, das heißt die Wählgasse des Schaltgetriebes 103, angewählt werden. Der Verbrennungsmotor 101 wird in der ersten Neutralstellung N1 gestartet. Wird in dieser Neutralstellung N1 die Kupplung 102 geschlossen, ohne einen Gang einzulegen, so ist optional - ähnlich wie bei einem herkömmlichen Start-Stopp-System - ein Abschalten des Verbrennungsmotors 101 vorgesehen, welches von Parametern wie Motor- oder Außentemperatur und Batterieladezustand abhängig sein kann. Gleichzeitig wird in diesem Fall der Sperrmechanismus SP geschlossen, sodass ein erneutes Einlegen des E-Gangs nur möglich wäre, wenn das Kupplungspedal 7 wieder getreten und damit der Sperrmechanismus SP deaktiviert werden würde. Regelmäßig ist jedoch davon auszugehen, dass der Fahrer nach dem Wechsel von der zweiten Neutralstellung N2 in die zweite Neutralstellung N1 einen der Gänge des Schaltgetriebes 103 einlegt und dann die Kupplung 102 schließt. Dies erfolgt im letzten Verfahrensschritt S6, womit der Wechsel in den verbrennungsmotorischen Antriebsmodus abgeschlossen ist.

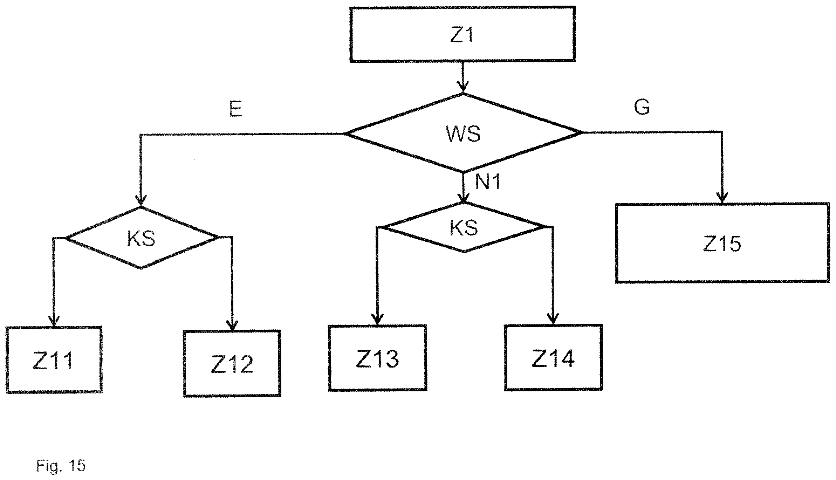

Im Diagramm nach Fig. 15 wird davon ausgegangen, dass sich das Hybridfahrzeug, dessen Antriebskonzept einer der Ausgestaltungen nach den Figuren 1 bis 6 entspricht, im Zustand Z1 im Stillstand befindet. Zustände Z11 bis Z15 des Antriebsstrangs sind hierbei insbesondere von der als Wählhebelstellung WS bezeichneten Stellung des Schalthebels 20 abhängig:
Befindet sich der Schalthebel 20 in der Stellung "E", so sind ferner Abhängigkeiten des Zustands des Antriebsstrangs von der Kupplungspedalstellung KS gegeben: Bei geschlossener Kupplung 102 ist der Sperrmechanismus SP verriegelt. Dieser Zustand ist mit Z11 bezeichnet. Der Verbrennungsmotor 101 ist oder wird hierbei gestoppt, sofern er nicht benötigt wird, um Energie, beispielsweise zur Erhaltung des Ladezustands oder zum Aufladen eines Generators und/oder zum Antrieb eines Kompressors einer Klimaanlage oder zur Erwärmung, zu liefern. Unabhängig vom Betriebszustand des Verbrennungsmotors 101 wird der Elektromotor 11 im Zustand Z11 bestromt, sobald das Gaspedal 106 betätigt wird.

Ist die Kupplung 102 dagegen geöffnet, was dem Zustand Z12 entspricht, so wird der Sperrmechanismus SP entriegelt, das heißt der Wechsel in den verbrennungsmotorischen Antriebsmodus ermöglicht. Hierbei bleibt der Verbrennungsmotor 101 in Betrieb beziehungsweise wird der Verbrennungsmotor 101 gestartet, sofern er noch nicht in Betrieb ist. Wird der Verbrennungsmotor 101 mit Leerlaufdrehzahl betrieben, so kann durch das Treten des Kupplungspedals 7, das heißt den Übergang vom Zustand Z11 in den Zustand Z12, eine automatische Erhöhung der Drehzahl des Verbrennungsmotors 101 ausgelöst werden.

Auch in der ersten Neutralstellung N1 des Schalthebels 20, welche aus Bedienersicht am ehesten mit der Stellung "N" des Wählhebels eines herkömmlichen Automatikfahrzeugs vergleichbar ist, sind Zustände im Antriebsstrang von der Kupplungspedalstellung KS abhängig. Solange die Kupplung 102 geschlossen ist, was dem Zustand Z 13 entspricht, bleibt der Sperrmechanismus SP verriegelt. Hat der Verbrennungsmotor 101 keine oder nur eine geringe Leistung für Nebenaggregate zu liefern, so kann der Verbrennungsmotor 101 im Zustand Z13 automatisch abgestellt werden, sofern er läuft. Mit dem Öffnen der Kupplung 102 erfolgt ein Übergang in den Zustand Z14, wobei der Sperrmechanismus SP entriegelt wird. Der Verbrennungsmotor 101 wird im Zustand Z14 gestartet, sofern er nicht bereits zu einem früheren Zeitpunkt gestartet wurde.

Der Zustand Z15 ist gegeben, wenn einer der Gänge G des Schaltgetriebes 103 eingelegt ist, wobei in diesem Zustand die Kupplung 102 geschlossen werden kann, um verbrennungsmotorisch anzufahren. Zusätzlich zum verbrennungsmotorischen Antrieb ist im Zustand Z15 optional eine Bestromung des Elektromotors 11 bei Betätigung des Gaspedals 106 vorgesehen.

### Bezugszeichenliste

- 1 ... 6: Vorwärtsgang
- 7: Kupplungspedal
- 8: Handschaltvorrichtung
- 9: Motorsteuerung
- 10: Steuereinheit
- 11: Elektromotor
- 12: Getriebe
- 13: Hinterrad
- 14: Gehäuse
- 15: Getriebeausgangswelle
- 16: Hinterachse
- 17: Kardanwelle
- 18: Getriebestufe
- 19: Kupplung
- 20: Schalthebel, Wählelement
- 21: Gelenk
- 22: Faltenbalg
- 23: Mittelkonsole
- 24: Schaltknauf
- 25: Schalteinrichtung
- 26: Wähleinrichtung
- 27: Sensoreinrichtung
- 28: Sperrelement
- 29: Elektromagnet
- 30: Schaltwelle
- 31: Schaltfinger
- 32: Schaltstange
- 33: Rastiervorrichtung
- 34: Sperrbolzen
- 101: Verbrennungsmotor
- 102: Kupplung
- 103: Schaltgetriebe
- 104: Differentialgetriebe
- 105: Vorderrad
- 106: Gaspedal

- E: E-Gang
- EG: E-Gang-Signal
- EGm: maximales E-Gang-Signal
- ES: Eingangssignal
- F: Betätigungskraft
- FE: erhöhte Betätigungskraft
- G: Gang
- GP: Gaspedalstellung
- ISC: Inverses Schaltschema
- KS: Kupplungspedalstellung
- N1: Neutralstellung
- N2: Neutralstellung
- n: Drehzahl
- NG: Drehzahl der Getriebeausgangswelle
- NM: Kurbelwellendrehzahl
- NR: Raddrehzahl
- PS: Pedalstellung
- R: Rückwärtsgang
- S1 ...: S6 Verfahrensschritt
- SC: Schaltschema
- SF: Sperrkraft
- SP: Sperrmechanismus
- t: Zeit
- t₁: Zeitpunkt
- VP: Vollgasphase
- WS: Wählhebelstellung
- Z1: Zustand
- Z11 ... Z15: Zustand

## Patentansprüche

1. Hybrid-Antriebseinheit, mit:
einem manuell betätigbaren Wählelement ,(20), welches zum Wechseln von Gängen eines mit einem Verbrennungsmotor (101) zusammenwirkenden Schaltgetriebes (103) sowie zur Aktivierung eines als Fahrantriebsmotor vorgesehenen Elektromotors (11) ausgebildet ist, wobei zwei verschiedene Neutralstellungen (N1,N2) des Wählelementes (20) existieren, welche jeweils mit einer Leerlaufstellung des Schaltgetriebes (103) korrespondieren, und wobei aus einer ersten Neutralstellung (N1) heraus die Gänge des Schaltgetriebes (103) wechselbar sind und in einer zweiten Neutralstellung (N2) ausschließlich der Elektromotor (11) als Fahrantrieb aktivierbar ist, und
einem Sperrmechanismus (SP), dessen Überwindung zum Wechsel des Wählelementes (20) zwischen der ersten Neutralstellung (N1) und der zweiten Neutralstellung (N2) erforderlich ist,
**dadurch gekennzeichnet, dass**
bei einem Wechsel des Wählelements (20) von einer Stellung (E), in der ausschließlich der Elektromotor (11) als Fahrantrieb aktiviert ist, zu der ersten Neutralstellung (N1) der Verbrennungsmotor (101) automatisch gestartet wird.

2. Hybrid-Antriebseinheit nach Anspruch 1, **dadurch gekennzeichnet, dass** der Sperrmechanismus (SP) mit einem manuell betätigbaren Kupplungsbetätigungsmechanismus (7) gekoppelt ist.

3. Hybrid-Antriebseinheit nach Anspruch 1 oder 2, **dadurch gekennzeichnet, dass** der Sperrmechanismus (SP) ein am Wählelement (20) angebrachtes Betätigungselement umfasst.

4. Hybrid-Antriebseinheit nach einem der Ansprüche 1 bis 3, **dadurch gekennzeichnet, dass** das Wählelement (20) als Schalthebel ausgebildet ist, welcher in einem H-förmigen Schaltschema schaltbar ist, wobei die beiden Neutralstellungen (N1,N2) des Wählelementes (20) in ein und derselben Gasse des H-förmigen Schaltschemas angeordnet sind.

5. Hybrid-Antriebseinheit nach einem der Ansprüche 1 bis 4, **dadurch gekennzeichnet, dass** der Sperrmechanismus (SP) ein Sperrelement (28) in der inneren Schaltung des Schaltgetriebes (103) umfasst.

6. Hybrid-Antriebseinheit nach Anspruch 4, **dadurch gekennzeichnet, dass** in der zweiten Neutralstellung (N2) des Wählelementes (20) ein Kraftfluss zwischen Verbrennungsmotor (101) und Antriebsrädern (105,13) ausschließlich durch die Leerlaufstellung des Schaltgetriebes (103) unterbrochen ist, wobei durch das Sperrelement (28) in der inneren Schaltung unmittelbar eine Schaltwelle (30) beinflusst ist.

7. Verfahren zum Betrieb eines durch einen Verbrennungsmotor (101) sowie elektromotorisch antreibbaren Hybridfahrzeugs, welches ein manuell mittels eines Wählelementes (20) betätigbares Schaltgetriebe (103) und eine zugehörige Kupplung (102) aufweist, wobei
das Wählelement (102) auch zur Umschaltung zwischen verbrennungsmotorischem und rein elektromotorischem Antrieb vorgesehen ist, und
die Umschaltung zwischen verbrennungsmotorischem und rein elektromotorischem Antrieb bei in Leerlaufstellung verbleibendem Schaltgetriebe (103) und manueller Entsperrung eines das Wählelement (20) blockierenden Sperrmechanismus (SP) erfolgt,
**dadurch gekennzeichnet, dass**
bei einem Wechsel des Wählelements (20) von einer Stellung (E), in der ausschließlich der Elektromotor (11) als Fahrantrieb aktiviert ist, zu einer ersten Neutralstellung (N1), aus der heraus Gänge des Schaltgetriebes (103) wechselbar sind, der Verbrennungsmotor (101) automatisch gestartet wird.

8. Verfahren nach Anspruch 7, **dadurch gekennzeichnet, dass** ein Umschalten zwischen verbrennungsmotorischem und rein elektrischem Antrieb durch koordiniertes Betätigen des Wählelementes (20) und Entsperren des Sperrmechanismus (SP) durch Betätigung der Kupplung (102) erfolgt.

9. Verfahren nach Anspruch 7 oder 8, **dadurch gekennzeichnet, dass** die Ansteuerung des elektromotorischen Antriebs in Abhängigkeit von der Betätigung der Kupplung (102), welche mechanisch nicht mit dem elektromotorischen Antrieb gekoppelt ist, erfolgt.

## Claims

1. Hybrid drive unit having:
a selector element (20) which can be activated manually and which is designed to shift gear speeds of a manual gear box (103) which interacts with an internal combustion engine (101) and to activate an electric motor (11) which is provided as a drive motor wherein there are two different neutral positions (N1, N2) of the selector element (20) which each correspond to an idle position of the manual gear box (103), and wherein the gears of the manual gear box (103) can be shifted out of a first neutral position (N1), and in a second neutral position (N2) the electric motor (11) can be activated exclusively as the drive, and
a locking mechanism (SP), the overcoming of which is necessary to shift the selector element (20) between the first neutral position (N1) and the second neutral position (N2),
**characterized in that**
when the selector element (20) shifts from a position (E) in which the electric motor (11) is activated exclusively as the drive, to the first neutral position (N1) the internal combustion engine (101) is started automatically.

2. Hybrid drive unit according to Claim 1, **characterized in that** the locking mechanism (SP) is coupled to a clutch activation mechanism (7) which can be activated manually.

3. Hybrid drive unit according to Claim 1 or 2, **characterized in that** the locking mechanism (SP) comprises an activation element which is attached to the selector element (20).

4. Hybrid drive unit according to one of Claims 1 to 3, **characterized in that** the selector element (20) is embodied as a shift lever which can be shifted in a H-shaped switching pattern, wherein the two neutral positions (N1, N2) of the selector element (20) are arranged in one and the same gutter of the H-shaped shifting pattern.

5. Hybrid drive unit according to one of Claims 1 to 4, **characterized in that** the locking mechanism (SP) comprises a locking element (28) in the internal shift system of the manual gear box (103).

6. Hybrid drive unit according to Claim 4, **characterized in that** in the second neutral position (N2) of the selector element (20), a force flux between the internal combustion engine (101) and the drive wheels (105, 13) is interrupted exclusively by the idle position of the manual gear box (103), wherein a shifting shaft (30) is influenced directly by the locking element (28) in the inner shift system.

7. Method for operating a hybrid vehicle which can be driven by an internal combustion engine (101) as well as by electric motor and which has a manual gear box (103) which can be activated manually by means of a selector element (20), and an associated clutch (102), wherein
the selector element (102) is also provided for switching between drive by internal combustion engine and purely electromotive drive, and
the switching over between the drive by internal combustion engine and purely electromotive drive occurs when the manual gear box (103) remains in the idle position and there is manual release of a locking mechanism (SP) which blocks the selector element (20),
**characterized in that**
when the selector element (20) shifts from a position (E) in which the electric motor (11) is activated exclusively as the drive to a first neutral position (N1) out of which gears of the manual gear box (103) can be shifted, the internal combustion engine (101) is started automatically.

8. Method according to Claim 7, **characterized in that** switching over between drive by internal combustion engine and purely electric drive is carried out by coordinated activation of the selector element (20) and release of the locking mechanism (SP) by activating the clutch (102).

9. Method according to Claim 7 or 8, **characterized in that** the actuation of the electromotive drive is carried out as a function of the activation of the clutch (102) which is not mechanically coupled to the electromotive drive.

## Revendications

1. Unité d'entraînement hybride, comprenant :
un élément de sélection (20) pouvant être actionné manuellement, lequel est conçu pour le changement de rapports d'une boîte de vitesses (103) coopérant avec un moteur à combustion interne (101) ainsi que pour l'activation d'un moteur électrique (11) prévu en tant que moteur d'entraînement de conduite, dans laquelle deux positions neutres (N1, N2) différentes de l'élément de sélection (20) existent, lesquelles correspondent respectivement à une position de point mort de la boîte de vitesses (103), et dans laquelle les rapports de la boîte de vitesses (103) peuvent être changés à partir d'une première position neutre (N1) et, dans une deuxième position neutre (N2), le moteur électrique (11) peut être activé exclusivement en tant qu'entraînement de conduite et
un mécanisme de blocage (SP) qu'il est nécessaire de surmonter pour le changement de l'élément de sélection (20) entre la première position neutre (N1) et la deuxième position neutre (N2),
**caractérisée en ce que**
le moteur à combustion interne (101) est démarré automatiquement lors d'un changement de l'élément de sélection (20) d'une position (E) dans laquelle le moteur électrique (11) est activé exclusivement en tant qu'entraînement de conduite à la première position neutre (N1) .

2. Unité d'entraînement hybride selon la revendication 1, **caractérisée en ce que** le mécanisme de blocage (SP) est accouplé à un mécanisme d'actionnement d'embrayage (7) pouvant être actionné manuellement.

3. Unité d'entraînement hybride selon la revendication 1 ou 2, **caractérisée en ce que** le mécanisme de blocage (SP) comporte un élément d'actionnement monté sur l'élément de sélection (20).

4. Unité d'entraînement hybride selon l'une des revendications 1 à 3, **caractérisée en ce que** l'élément de sélection (20) est réalisé sous forme de levier sélecteur, lequel peut être commuté dans un schéma de changement de vitesses en forme de H, les deux positions neutres (N1, N2) de l'élément de sélection (20) étant disposées dans une seule et même voie du schéma de changement de vitesses en forme de H.

5. Unité d'entraînement hybride selon l'une des revendications 1 à 4, **caractérisée en ce que** le mécanisme de blocage (SP) comprend un élément de blocage (28) dans la commande intérieure de la boîte de vitesses (103).

6. Unité d'entraînement hybride selon la revendication 4, **caractérisée en ce que**, dans la deuxième position neutre (N2) de l'élément de sélection (20), un flux de force entre le moteur à combustion interne (101) et des roues motrices (105, 13) est interrompu exclusivement par la position de point mort de la boîte de vitesses (103), un arbre de sélection (30) étant influencé directement par l'élément de blocage (28) dans la commande intérieure.

7. Procédé permettant de faire fonctionner un véhicule hybride pouvant être entraîné par un moteur à combustion interne (101) ainsi que par un moteur électrique, lequel véhicule hybride comprend une boîte de vitesses (103) pouvant être actionnée manuellement au moyen d'un élément de sélection (20) et un embrayage (102) associé, dans lequel
l'élément de sélection (102) est également prévu pour la commutation entre un entraînement à moteur à combustion interne et un entraînement seulement à moteur électrique et
la commutation entre un entraînement à moteur à combustion interne et un entraînement seulement à moteur électrique s'effectue en cas de boîte de vitesses (103) demeurant dans la position de point mort et en cas de déblocage manuel d'un mécanisme de blocage (SP) bloquant l'élément de sélection (20),
**caractérisé en ce que**
le moteur à combustion interne (101) est démarré automatiquement lors d'un changement de l'élément de sélection (20) d'une position (E) dans laquelle le moteur électrique (11) est activé exclusivement en tant qu'entraînement de conduite à une première position neutre (N1) à partir de laquelle des rapports de la boîte de vitesses (103) peuvent être changés.

8. Procédé selon la revendication 7, **caractérisé en ce qu'**une commutation entre un entraînement à moteur à combustion interne et un entraînement seulement à moteur électrique s'effectue par actionnement coordonné de l'élément de sélection (20) et déblocage du mécanisme de blocage (SP) par actionnement de l'embrayage (102).

9. Procédé selon la revendication 7 ou 8, **caractérisé en ce que** la commande de l'entraînement à moteur électrique s'effectue en fonction de l'actionnement de l'embrayage (102), lequel n'est pas accouplé mécaniquement à l'entraînement à moteur électrique.
